**Europäisches Patentamt**

**European Patent Office**

**Office européen des brevets**

(11) Numéro de publication: **0 130 918**
**B1**

(12) ## FASCICULE DE BREVET EUROPÉEN

(45) Date de publication du fascicule du brevet:
23.09.87

(51) Int. Cl.⁴: **B 60 N 1/06,** A 47 C 7/38,
A 47 C 31/02

(21) Numéro de dépôt: **84401395.3**

(22) Date de dépôt: **02.07.84**

(54) **Perfectionnements aux appuis-têtes et coussins analogues et à leurs procédés de fabrication.**

(30) Priorité: **01.07.83 FR 8311002**

(43) Date de publication de la demande:
**09.01.85 Bulletin 85/2**

(45) Mention de la délivrance du brevet:
**23.09.87 Bulletin 87/39**

(84) Etats contractants désignés:
**BE DE GB IT**

(56) Documents cité:
**FR-A-1 471 309**

(73) Titulaire: **SOCIETE INDUSTRIELLE BERTRAND FAURE, Brières les Scellés, F-91150 Etampes (FR)**

(72) Inventeur: **Bart, Jean- Michel, 31 rue JE. Guettard, F-91150 Etampes (FR)**

(74) Mandataire: **Behaghel, Pierre, CABINET PLASSERAUD 84 rue d'Amsterdam, F-75009 Paris (FR)**

LIBER, STOCKHOLM 1987

## Description

L'invention est relative aux appuis-têtes et coussins du même genre, c'est-à-dire comportant un corps rembourré en mousse logé à l'intérieur d'une housse et une armature rigide noyée dans ce corps, armature prolongée par au moins une tige de support traversant ladite housse.

Parmi les coussins de ce genre autres que les appuis-têtes, on peut citer les dossiers de sièges délimités extérieurement par des housses en forme de chaussettes renversées fermées à leur base après introduction des armatures rigides correspondantes, (FR-A- 1 471 309).

Pour simplifier la description, ces différents coussins seront assimilés dans ce qui suit à des "appuis-têtes" et donc désignés par cette expression, mais il doit être bien compris que l'invention n'est pas limitée à des appuis-têtes proprement dits, même si son application préférée concerne de tels appuis-têtes, et plus précisément ceux, de ces appuis-têtes, qui sont réglables en inclinaison autour d'un axe horizontal transversal.

Lors de la fabrication d'un tel coussin, on commence par préparer une housse dans son état fermé définitif à l'exception d'une ouverture s'étendant selon une fente à proximité des lumières prévues pour le passage des tiges de support; puis on introduit l'armature rigide dans la housse à travers ladite fente; on obture ensuite la fente à l'aide d'un cache rigide perforé uniquement au niveau des lumières ci-dessus, les deux lèvres de cette fente étant reliées de façon étanche à ce cache; en même temps, ou après ladite obturation, on place les pieds de l'armature en regard des lumières correspondantes et on relie de façon étanche à ces pieds les bords de ces lumières; et l'on forme la mousse constitutive du corps rembourré, mousse qui enrobe l'armature et occupe la totalité du volume intérieur restant de la housse en donnant au coussin sa forme définitive.

L'invention a pour but, surtout, de permettre la suppression du cache rigide utilisé pour obturer la fente.

Cette suppression présente plusieurs avantages et en particulier les suivants:

- elle élimine l'obstacle dur constitué par le cache de l'appui-tête, obstacle susceptible de blesser la tête du passager arrière d'un véhicule dont le siège avant correspondant est équipé dudit appui-tête, lorsque cette tête vient en contact avec cet obstacle par suite d'une décélération trop forte dudit véhicule, notamment si l'appui-tête en question est réglable en inclinaison et basculé vers l'une de ses positions avant,

- elle permet de faire l'économie du cache et de réduire en conséquence le prix de revient de l'appui-tête,

- elle améliore l'esthétique générale de cet appui-tête, dont l'aspect donne une impression de confort accru.

A cet effet les appuis-têtes selon l'invention sont caractérisés en ce qu'un ruban en matière plastique initialement fendu s'étend le long des deux lèvres accolées de la fente évidée dans la housse, à l'intérieur de cette housse, de façon telle que la fente du ruban et celle de la housse soient disposées en regard l'une de l'autre.

La présence de ce ruban fendu rend très facile la fermeture de l'ensemble des deux fentes en regard, après introduction de l'armature rigide à l'intérieur de la housse, et ce sans formation de points durs dans la zone d'obturation.

En d'autres termes, les seuls points durs apparaissant sur la surface extérieure de l'appui-tête sont localisés aux traversées de la housse par les tiges de support.

Dans des modes de réalisation préférés, on a recours en outre à l'une et/ou à l'autre des dispositions suivantes:

- le ruban est raccordé à une boucle fermée entourant chacune des lumières évidées dans la housse pour le passage des tiges de support,

- une feuille perméable à la mousse constitutive du corps rembourré en cours de formation recouvre la fente à l'intérieur de la housse,

- la feuille selon l'alinéa précédent est une bavette fixée à proximité de la fente, d'un seul côté de celle-ci, à la façon d'un volet susceptible d'être écarté de la fente par l'armature rigide au cours de l'introduction de celle-ci à l'intérieur de la housse et au contraire à être appliqué contre cette fente depuis l'intérieur de la housse par la mousse en cours de formation,

- l'obturation de la fente initialement évidée dans le ruban est réalisée par chauffage du ruban,

- le nombre de lumières évidées dans la housse pour le passage des tiges de support étant égal à deux, l'ensemble des deux fentes en regard s'étend entre ces deux lumières, mais est interrompu à une petite distance de chacune d'elles par des petits ponts et l'obturation de cet ensemble de fentes est effectuée à l'aide d'une sonotrode à deux électrodes parallèles dont l'une est enfilée dans les deux lumières de façon à placer ledit ensemble de fentes entre les deux électrodes,

- l'obturation de la fente initialement évidée dans le ruban est réalisée par pénétration de mousse entre les deux lèvres de cette fente.

L'invention se rapporte, en outre, à un procédé de fabrication des appuis-têtes, conformément aux revendications 5 à 8.

Dans ce qui suit, l'on va décrire des modes de réalisation préférés de l'invention en se référant aux dessins ci-annexés d'une manière bien entendu non limitative.

La figure 1, de ces dessins, montre en vue perspective un appui-tête établi selon l'invention.

Les figures 2 et 3 montrent respectivement en vue de dessous et en coupe partielle transversale selon III-III, figure 2, la housse telle que préalablement préparée, destinée à la fabrication d'un tel appui-tête.

Les figures 4, 5 et 6 montrent trois phases successives de cette fabrication.

Les figures 7 et 8 montrent à échelle agrandie, respectivement en vue de dessous et en coupe partielle selon VIII-VIII, figure 7, une variante de la housse des figures 2 et 3.

La figure 9 montre en coupe un détail d'une autre variante d'une telle housse.

D'une façon connue en soi, l'appui-tête considéré comprend un corps rembourré 1 en mousse élastique contenu à l'intérieur d'une housse 2 fermée, constituée généralement en tissu (mais pouvant l'être aussi en matière plastique, en cuir ...) et renforcé par une armature interne 3 constituée ici par un étrier métallique.

Les deux pattes de cet étrier sont terminées par des pieds 4 eux-mêmes raccordés à deux tiges extérieures de support 5 dont les têtes traversent deux lumières 6 évidées dans la housse 2.

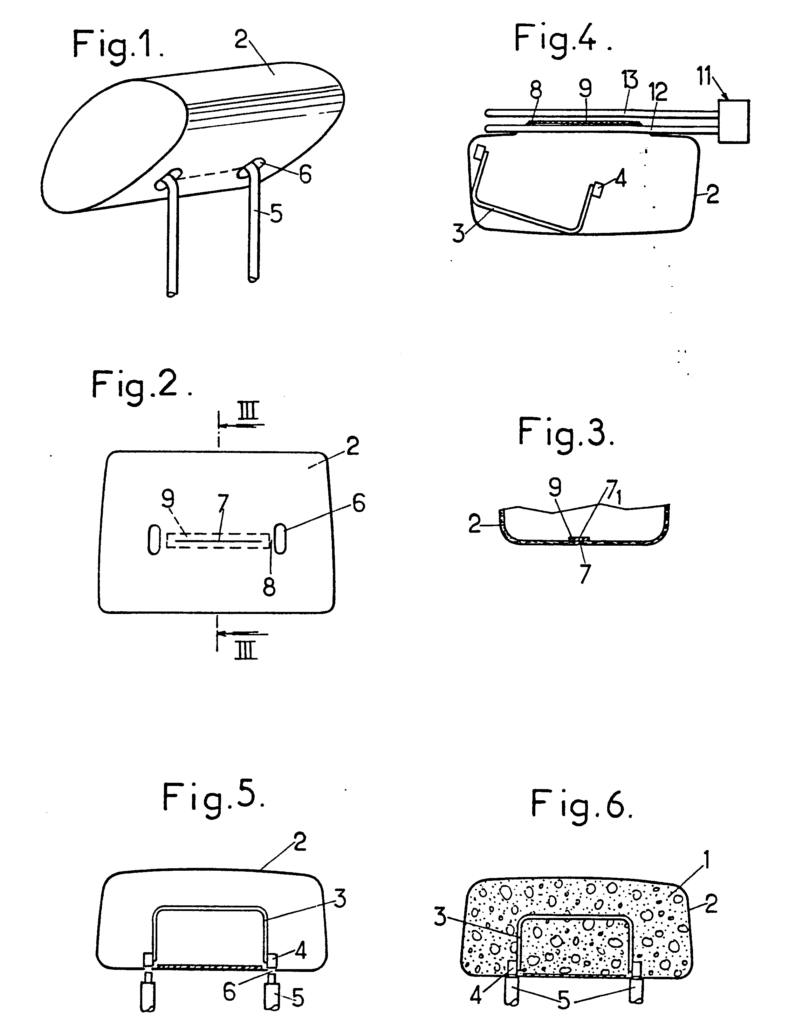

Pour fabriquer un tel appui-tête, on commence par préparer la housse en son état presque totalement fermé, les seules ouvertures pratiquées dans cette housse étant les lumières 6 et une fente rectiligne 7 (fig. 2) qui s'étend entre ces lumières.

La fente 7 peut être interrompue à chacune de ses extrémités à une petite distance des lumières voisines 6, ce qui réserve des petits ponts 8 entre ces extrémités et ces lumières.

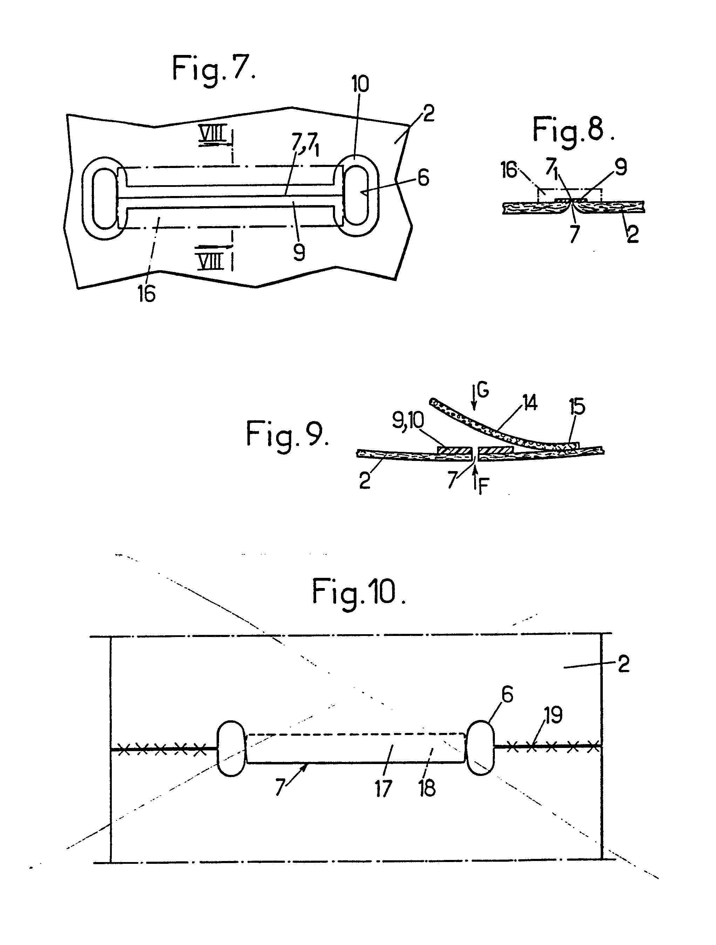

Mais il est possible également de prolonger la fente 7 jusqu'aux lumières 6, comme visible sur la figure 7.

La portion fendue de la housse est renforcée avantageusement par un ruban en matière plastique 9, lequel est appliqué contre la face interne de cette housse de façon à recouvrir les deux lèvres de la fente 7.

Cette application est effectuée à plat sur la feuille de départ constitutive de la housse, avant mise en forme de cette housse.

Le ruban 9, constitué notamment en polychlorure de vinyle ou en une polyamide, présente par exemple une largeur de l'ordre de 15 mm et une épaisseur au plus égale à 1 mm de façon qu'il conserve une certaine souplesse.

Ledit ruban 9 est lui-même fendu en $7_1$ au droit de la fente 7, les deux fentes 7 et $7_1$ en regard étant de préférence exécutées lors d'une même opération de découpage.

Le ruban 9 peut constituer une portion d'une pièce découpée, en matière plastique également, comprenant, en plus de ce ruban, deux boucles fermées 10 prolongeant ledit ruban et propres à entourer chacune une lumière 6 (fig. 7 et 8): l'application de cette pièce 9, 10 est également exécutée à plat sur la feuille de départ et les différentes ouvertures y sont de préférence évidées en même temps que celles évidées dans ladite feuille.

Le rôle des fentes 7 et $7_1$ est de livrer passage à l'armature 3, 4.

Il est en effet précieux de pouvoir confectionner presque intégralement la housse 2 avant même que celle-ci ne soit garnie de ladite armature, laquelle est relativement pesante et encombrante.

Une fois introduite l'armature dans la housse à travers les fentes 7 et $7_1$ suffisamment élargies à cet effet, on obture ces fentes.

Cette obturation est avantageusement effectuée par soudure à l'aide d'une sonotrode (fig. 4) présentant deux électrodes 12 et 13 en forme de tiges parallèles susceptibles d'être appliquées transversalement l'une contre l'autre.

A cet effet l'on enfile l'une des électrodes 12 dans les deux lumières 6 évidées dans la housse, en pliant légèrement les portions de cette housse situées aux abords immédiats de ces lumières, de façon à faire passer entre les deux électrodes le tronçon fendu de cette housse qui s'étend entre les deux lumières, le reste de la housse demeurant de l'autre côté de l'électrode 12 (voir figure 4): ce type d'enfilement est rendu possible par la présence des petits ponts 8.

On applique ensuite si nécessaire les deux électrodes 12 et 13 l'une contre l'autre et l'on fait fonctionner l'appareil de façon à ramollir suffisamment par la chaleur le ruban de matière plastique 9, alors situé entre les deux électrodes, pour assurer la soudure mutuelle des lèvres juxtaposées de la fente $7_1$ et éventuellement celle des lèvres juxtaposées de la fente 7.

Après cette soudure, on dégage axialement l'électrode 12 en dehors de la housse.

L'obturation de la fente est alors achevée et, dans la plupart des cas, en particulier lorsque la matière souple constitutive de la housse est suffisamment épaisse, ladite fente a pratiquement disparu sans laisser de trace visible.

La fente ainsi obturée et ses abords immédiats présentent une bonne souplesse, généralement comparable à celle des autres régions de la housse.

Après l'obturation de la fente, on met en place l'armature 3 à l'intérieur de la housse 2 de façon telle que ses pieds 4 se présentent en regard des lumières 6, comme visible sur la figure 5.

On raccorde alors à ces pieds les têtes des tiges extérieures 5 de façon à pincer de manière étanche, entre ces pieds et ces têtes, les portions, de la housse 2, matérialisant les bords desdites lumières 6.

Puis on injecte à l'intérieur de la housse alors fermée les produits susceptibles d'engendrer la mousse, à travers une ouverture provisoire pratiquée dans cette housse.

Pour éviter que les produits ainsi injectés, généralement à l'état crémeux, ne transpercent la housse 2, on prend soin de tapisser au préalable la face interne de cette housse par une mince couche de mousse, d'une façon en soi connue.

On laisse ensuite la mousse se développer et se solidifier, ce qui forme le corps rembourré élastique avec son armature 3 noyée in situ et confère à l'appui-tête sa forme définitive, visible sur la figure 6.

La figure 9 illustre une variante selon laquelle une "bavette" 14 est assujettie le long de l'un de ses bords 15 contre la face interne de la housse 2 de façon à pouvoir être pliée ou dépliée comme un volet et être ainsi à volonté appliquée contre la fente (7, $7_1$) ou au contraire écartée de cette fente.

L'écartement est automatiquement obtenu par la poussée, selon la flèche F, de l'armature 3, 4 lors de l'introduction de celle-ci à l'intérieur de la housse.

En sens inverse l'application de la bavette 14 contre les deux bords de la fente (7, $7_1$) selon la flèche G est automatiquement assurée par la pression développée à l'intérieur de la housse lors de la création de la mousse.

La matière souple constitutive de la bavette 14 est avantageusement choisie perméable à ladite mousse, ce qui permet à celle-ci de venir adhérer, à travers la bavette, contre les deux tronçons de la housse 2 ou de ruban plastique 9 juxtaposés le long de la fente (7, $7_1$) et ainsi d'obturer cette fente.

La pièce rectangulaire représentée par des traits mixtes en 16 sur les figures 7 et 8 peut jouer un rôle analogue à celui de la bavette 14 et être mise en place contre la fente (7, $7_1$) à l'intérieur de la housse 2 après l'introduction de l'armature à l'intérieur de cette housse.

En suite de quoi, et quel que soit le mode de réalisation adopté, on dispose finalement d'appuis-têtes dont la structure et la fabrication résultent suffisamment de ce qui précède.

- Ces appuis-têtes présentent de nombreux avantages par rapport à ceux antérieurement connus, et en particulier les suivants:

- ils sont dépourvus de toute zone dure en dehors des traversées inévitables de leur housse par les éléments de support de leur armature interne,

- ils présentent un aspect extérieur particulièrement esthétique donnant une impression de confort et de "douceur",

- leur prix de revient est modéré.

## Revendications

1. Appui-tête ou coussin analogue comportant un corps rembourré (1) en mousse logé à l'intérieur d'une housse (2) et une armature rigide (3, 4) noyée dans ce corps, armature prolongée par au moins une tige de support (5) traversant ladite housse, une fente (7) étant évidée dans la base de la housse pour permettre l'introduction de l'armature à l'intérieur de celle-ci, caractérisé en ce qu'un ruban en matière plastique (9) initialement fendu (en $7_1$) s'étend le long des deux lèvres accolées de la fente (7), à l'intérieur de la housse (2), de façon telle que les deux fentes (7 et $7_1$) soient disposées en regard l'une de l'autre.

2. Appui-tête selon la revendication 1, caractérisé en ce que le ruban (9) est raccordé à une boucle fermée (10) entourant chacune des lumières (6) évidées dans la housse (2) pour livrer passage aux tiges de support (5).

3. Appui-tête selon l'une quelconque des précédentes revendications, caractérisé en ce qu'une feuille (16) perméable à la mousse en cours de formation recouvre les fentes (7 et $7_1$) à l'intérieur de la housse (2).

4. Appui-tête selon la revendication 3, caractérisé en ce que la feuille est une bavette (14) fixée (en 15) à proximité des fentes (7 et $7_1$), d'un seul côté de celles-ci, à la façon d'un volet susceptible d'être écarté des fentes par l'armature rigide (3, 4) au cours de l'introduction de celle-ci à l'intérieur de la housse (2) et au contraire d'être appliqué contre ces fentes depuis l'intérieur de la housse par la mousse en cours de formation (1).

5. Procédé pour fabriquer un appui-tête selon l'une quelconque des précédentes revendications, caractérisé en ce que la fente ($7_1$) initialement évidée dans le ruban (9) est obturée de manière souple après introduction de l'armature rigide (3, 4) à l'intérieur de la housse (2).

6. Procédé de fabrication selon la revendication 5, caractérisé en ce que l'obturation de la fente ($7_1$) est réalisée par chauffage du ruban (9).

7. Procédé de fabrication selon la revendication 6, pour lequel le nombre de lumières (6) évidées dans la housse (2) pour le passage des tiges de support (5) est égal à deux, caractérisé en ce que la fente complète (7, $7_1$) s'étend entre ces deux lumières (6) mais est interrompue à une petite distance de chacune d'elles par des petits ponts (8) et en ce que l'obturation de cette fente est effectuée à l'aide d'une sonotrode (11) à deux électrodes parallèles (12, 13) dont l'une (12) est enfilée dans les deux lumières (6) de façon à placer le tronçon fendu de la housse (2) entre les deux électrodes.

8. Procédé de fabrication selon l'une quelconque des revendications 5 à 7, caractérisé en ce que l'obturation de la fente ($7_1$) est réalisée par pénétration de mousse entre les deux lèvres de cette fente.

## Patentansprüche

1. Kopfstütze oder ähnliches Kissen mit einem Polsterkörper (1) aus Schaumstoff im Inneren eines Überzuges (2) und einem im Polsterkörper einliegenden starren Halter (3, 4), der durch wenigstens eine Tragstange (5) verlängert ist, die den Überzug (2) durchdringt, wobei im Überzug (2) an seiner Unterseite ein Fenster (7) eingeschnitten ist, um den Halter (3, 4) in das Innere einführen zu können, dadurch gekennzeichnet, daß sich ein anfänglich (bei $7_1$) geschlitzter Streifen (9) aus Kunststoff längs der beiden an das Fenster (7) angrenzenden Lippen im Innern des Überzuges (2) derart erstreckt, daß die beiden Fenster (7, $7_1$) aufeinander ausgerichtet sind.

2. Kopfstütze nach Anspruch 1, dadurch gekennzeichnet, daß der Streifen (9) mit einer geschlossenen Schleife (10) verbunden ist, die jede Öffnung (6) umschließt, die in den Überzug (2) für den Durchtritt der Tragstange (5) eingelassen ist.

3. Kopfstütze nach einem der vorhergehenden Ansprüche, dadurch gekennzeichnet, daß ein für den Schaumstoff bei seiner Bildung durchlässiges Blatt (16) im Innern des Überzuges (2) die Fenster (7, 7₁) abdeckt.

4. Kopfstütze nach Anspruch 3, dadurch gekennzeichnet, daß das Blatt als Latz (14) ausgebildet ist, welcher in der Nähe der Fenster (7, 7₁) auf einer Seite derselben in der Art einer Klappe befestigt ist, die geeignet ist, die Fenster beim dem Einführen des starren Halters in das Innere des Überzuges (2) freizugeben und sich andererseits durch den Schaumstoff bei seiner Bildung an diese Fenster (7, 7₁) vom Innern des Überzuges (2) anzulegen.

5. Verfahren zum Herstellen einer Kopfstütze nach einem der vorhergehenden Ansprüche, dadurch gekennzeichnet, daß das anfänglich im Streifen (9) enthaltene Fenster (7₁) nach dem Einführen des starren Halters (3, 4) in das Innere des Überzuges (2) biegsam verschlossen ist.

6. Verfahren nach Anspruch 5, dadurch gekennzeichnet, daß das Fenster (7₁) durch Beheizen des Streifens (9) verschlossen wird.

7. Verfahren nach Anspruch 6, bei dem die Anzahl der Öffnungen (6) im Überzug (2) für den Durchtritt der Tragstange (5) gleich zwei ist, dadurch gekennzeichnet, daß das Fenster (7) sich vollständig zwischen den zwei Öffnungen (6) erstreckt, aber auf einem kleinen Teil seiner Länge durch kleine Brücken (8) unterbrochen ist und daß das Verschließen des Fensters (7) mit Hilfe eines Ultraschall-Schweißgerätes mit zwei parallelen Elektroden (12, 13) bewirkt wird, wobei eine Elektrode (12) die zwei Öffnungen (6) derart durchdringt, daß der aufgeschlitzte Abschnitt des Überzuges (2) zwischen den beiden Elektroden liegt.

8. Verfahren nach einem der Ansprüche 5 bis 7, dadurch gekennzeichnet, daß das Verschließen des Fensters (7₁) durch Eindringen von Schaumstoff zwischen die beiden Lippen dieses Fensters (7₁) bewirkt wird.

**Claims**

1. A head rest or similar cushion or pad or the like comprising a foam-padded member (1) received in a loose cover or the like (2) and a rigid framework (3, 4) embedded in the padded member (1), the framework (3, 4) being extended by at least one support rod (5) which extends through the loose cover (2), the base thereof being formed with a slot (7) for the introduction of the framework (3, 4) into the loose cover, characterised in that a plastics strip or tape or the like (9) initially split (at 7₁) so extends along the two facing lips of the slot (7) inside the loose cover (2) that the two slots (7, 7₁) are disposed opposite one another.

2. A head rest according to claim 1, characterised in that the strip (9) is connected to a closed loop (10) extending around each of the apertures (6) in the loose cover (2) for the passage of the support rods (5).

3. A head rest according to any of the previous claims, characterised in that a sheet (16) permeable by the foam during formation thereof covers the slots (7, 7₁) in the loose cover (2).

4. A head rest according to claim 3, characterised in that the sheet is a flap-like member (14) secured (at 15) near the slots (7, 7₁) just on one side thereof at the fashion of a flap adapted to be moved away ffrom the slots by the rigid framework (3, 4) during the introduction thereof into the loose cover (2) and, on the other hand, to be engaged with the slots from inside the loose cover (2) by the evolving foam (1).

5. A process for producing a head rest according to any of the previous claims, characterised in that the slot (7₁) initially present in the strip (9) is closed flexibly after the introduction of the rigid framework (3, 4) into the loose cover (2).

6. A process according to claim 5, characterised in that the slot (7₁) is closed by heating of the strip (9).

7. A process according to claim 6 in which there are two apertures (6) for the rods (5) in the loose cover (2), characterised in that the complete slot (7, 7₁) extends between the two apertures (6) but is interrupted a short distance away from each of them by small webs (8); and the slot is closed by means of a sonotrode (11) having two parallel electrodes (12, 13), one electrode (12) being threaded into the two apertures (6) so as to position the slotted part of the loose cover (2) between the two electrodes.

8. A process according to any of claims 5 - 7, characterised in that the slot (7 ) is closed by penetration of foam between the two lips of such slot (7₁).

Fig.1.

Fig.4.

Fig.2.

Fig.3.

Fig.5.

Fig.6.

# Fig. 7.

# Fig. 8.

# Fig. 9.

# Fig. 10.